# EUROPEAN PATENT APPLICATION

(11) **EP 0 562 684 A1**
(43) Date of publication of application: **29.09.1993**
(21) Application number: 93200813.9
(22) Date of filing: 19.03.1993
(51) Int. Cl.: G05D 23/19

(54) **Improved environmental thermostatic switch, particularly suitable for wall boilers**

(30) Priority: 25.03.1992 IT MI920701
(71) Applicant: NUOVOPIGNONE INDUSTRIE MECCANICHE E FONDERIA S.p.A., I-50127 Florence (IT)
(72) Inventor: Biagini, Giuliano, I-50126 Florence (IT); Lacitignola, Pietro, I-50136 Florence (IT)

(57) **Abstract**

Environmental thermostatic switch for wall boilers in which the temperature sensing element is connected in series with a light emitting diode (also designated, in short form, "LED"), and in parallel to both of them a second light emitting diode (LED) is connected, oriented in opposite direction to said first LED.

A variant is furthermore provided.

## Description

The present invention relates to a bifilar-input environmental thermostatic switch which, by being only fed at its two input terminals with limited-current positive and/or negative voltage half-waves, generated by an interface circuit, and allowing not only a larger number of signals to be transmitted to said interface circuit, but also a larger number of information items to be received and consequently displayed, as well as making it possible also electrical power to be made available for feeding internal circuit system, such as, e.g., those relevant to switching-on clocks, allows the wall boilers to be controlled and checked with greater efficiency.

More specifically, the above said environmental thermostatic switch is particularly suitable for use with the interface circuit which is the subject-matter of our prior Italian patent application MI 91 A003416, filed on Dec. 19^{th}, 1991.

From the prior art, several types of environmental thermostatic switches are already known.

The most widely diffused type from those known from the prior art, is constituted by a simple temperature sensing element causing a contact applied to said input terminals of said thermostatic switch to switch on/off.

Unfortunately, such a standard thermostatic switch is affected by a plurality of drawbacks, due to it being incapable of transmitting any further information additionally to the information relating to the state of said contact; it cannot receive -- and hence, display -- other information data, and, above all, it cannot make available the necessary electrical power for feeding internal circuit systems, but increasing the number of input terminals.

Other types of environmental thermostatic switches known from the prior art allow, on the contrary, information to be transmitted in both directions, but said transmission is only made possible with the use of special and specific interface circuits which do not make it possible the traditional standard thermostatic switches to be connected but, through additional interface terminals which are provided in said interface circuits, with considerable complexities arising as regards the structure of the latter, point, as well as the connection thereof.

The purpose of the present invention is of obviating the above said drawbacks, and hence providing an environmental thermostatic switch which undoubtedly is of the type with bifilar input and not only performs the normal function of temperature control, but also allows a bidirectional information transmission to take place from/to the relevant interface circuit and makes available electric power for feeding specific inner circuit systems, such as switching-on clocks, scheduling units and environmental parameter displays.

The above purpose is substantially achieved by connecting the temperature sensing element in series with a light emitting diode (also designated, in short form, "LED"), and in parallel to both of them a second LED is connected, oriented in reverse direction to the first LED.

In that way, in fact, the on/off and/or blinking conditions of both of the above light emitting diodes (LED's) make it possible even 6 operating situations to be detected and displayed. For example, the lighting of the first LED, due to passage of positive current half-waves through its circuit branch may imply that the temperature sensing element is closed, i.e., the room temperature is lower than the programmed temperature set point; on the other hand, said passage of positive current half-waves through said thermostatic switch branch, by substantially shorting the interface circuit output terminals, will determine the arising, in said circuit, of a boiler burner switching on command.

On the contrary, said first LED being off may be synonymous of temperature sensing element being in open condition, and hence of the programmed temperature set point being reached, with consequently said switching on command being reset inside the interface circuit.

Said first LED blinking -- caused by the interface circuit by means of a cyclic suppression of positive current half-waves -- may, on the contrary, be indicative of the temperature threshold value set on the boiler for heating system water being reached, with the burner being consequently switched off, although the temperature sensing element is still closed, demanding for heat supply.

The second LED being in on condition, caused by negative current half-waves flowing through the circuit, may then be indicative of the arising of a boiler malfunctioning condition, a signal which will be always generated independently from the temperature sensor element being open or closed, and the second LED being in off condition, obtained by shorting said negative current half-waves inside said interface circuit, may evidence the correct boiler operation.

Finally, the second LED blinking may indicate a still correct, but non-optimal boiler operation, so that a quick servicing is ingently required.

Then, according to a typical variant of the present invention, in series with said first LED there are installed a low-threshold-voltage Zener diode opposite to said first LED, as well as a circuit breaker piloted by an inner circuit of the thermostatic switch, such as, e.g., a scheduler clock, which inner circuit is fed, in parallel to a rechargeable buffer accumulator battery, by said thermostatic switch input terminals through a non-return diode put in series with a high-resistance current limiter resistor.

In that way, energy can be drawn in order to feed the circuit systems installed, as well as the buffer accumulator battery, which can consequently continue to supply electrical power to said circuit systems also in the absence of supply from mains and, on the other hand, the high resistance of said current limiter resistor, by allowing only extremely low current values to be absorbed, secures that the above disclosed operating way of the thermostatic switch is kept substantially unaltered.

The present invention is better explained now by referring to the accompanying drawings, which illustrate preferred embodiments supplied for merely exemplifying, non-limitative purposes, because technical or structural variants may always be supplied without departing from the scope of the present invention.

In said drawings:
Figure 1 shows the wiring diagram of an environmental thermostatic switch for wall boilers, accomplished according to the present invention;
Figure 2 shows the wiring diagram of an environmental thermostatic switch for wall boilers, accomplished according to the variant of the present invention.

Referring to the figures, with 1 the environmental thermostatic switch is indicated, whose input terminals 2 and 3 are connected with the corresponding output terminals of the interface circuit 4 of a wall boiler.

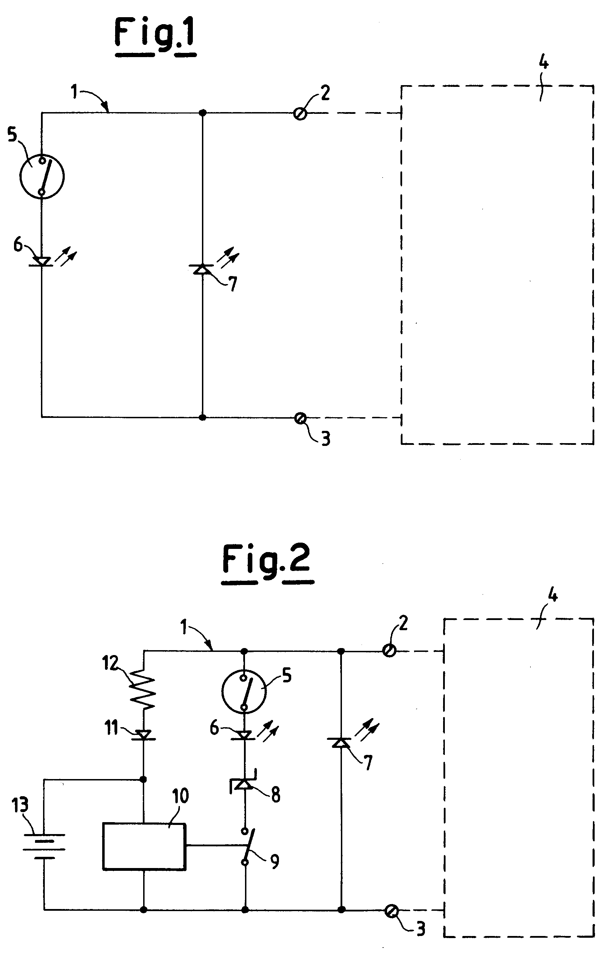

Said thermostatic switch 1 comprises a temperature sensing element 5 which, connected in series with a light emitting diode (LED) 6, is fed by a circuit branched from said terminals 2 and 3, from which also a circuit feeding a second light emitting diode (LED) 7 is branched, with said LED 7 being in the opposite direction to said first LED 6 (with specific reference to Figure 1).

Then, according to the variant of Figure 2, still in series with said temperature sensing element 5 and with said LED 6 there are provided a low-threshold-voltage Zener diode installed in opposition to said LED 6, as well as a circuit breaker 9 piloted by an inner circuit 10 of the thermostatic switch 1, which is fed by said terminals 2 and 3 through a non-return diode 11 put in series with a high-resistance resistor 12. Finally, in parallel to said circuit 10 a rechargeable buffer accumulator battery 13 is provided.

## Claims

1. Environmental thermostatic switch with bifilar input, comprising a temperature sensing element branched between the two said input terminals of said thermostatic switch, which terminals are connected with the two output terminals of an interface circuit feeding limited-current positive and/or negative voltage half-waves as the one which is disclosed in Italian patent application MI 91 A 003416, characterized in that said temperature sensing element is connected in series with a light emitting diode (also designated, in short form, "LED"), and in parallel to both of them a second light emitting diode (LED) is connected, oriented in opposite direction to the first LED.

2. Environmental thermostatic switch with bifilar input according to claim 1, characterized in that in series with said first LED there are installed, in opposition to it, a low-threshold-voltage Zener diode, as well as a circuit breaker piloted by an inner circuit system of the thermostatic switch, such as, e.g., a scheduler clock, which inner circuit is fed, in parallel to a rechargeable buffer accumulator battery, by said input terminals of said thermostatic switch through a non-return diode in series with a high-resistance current limiter resistor.
